# EUROPEAN PATENT APPLICATION

(11) **EP 4 817 429 A1**
(43) Date of publication of application: **07.10.2026**
(21) Application number: 24897693.8
(22) Date of filing: 29.11.2024
(51) Int. Cl.: A23L 27/00, A23L 11/65, A23L 23/00, A23L 27/60

(54) **OFF-FLAVOR REDUCER CONTAINING ERGOTHIONEINE AS ACTIVE INGREDIENT**

(30) Priority: 29.11.2023 JP 2023201279
(71) Applicant: Kikkoman Corporation, Noda-shi, Chiba 278-8601 (JP)
(72) Inventor: ICHIKAWA, Keiichi, Noda-shi, Chiba 278-8601 (JP); TAJIMA, Ryoko, Noda-shi, Chiba 278-8601 (JP)
(74) Representative: TBK
(86) International application number: PCT/JP2024/042321
(87) International publication number: WO 2025/116011

(57) **Abstract**

Provided is an off-flavor reducer that reduces off-flavor of bitter substances and seasonings, or to provide a food or beverage product in which off-flavor is reduced by addition of the off-flavor reducer.

The off-flavor reducer contains ergothioneine as an active ingredient. In a food or beverage product containing ergothioneine as a bitterness reducer, bitterness is reduced, in a seasoning having a pungent taste, a pungent taste is reduced, and beany odor of soy milk and the like can also be reduced.

## Description

### TECHNICAL FIELD

The present invention relates to an off-flavor reducer for a bitter substance or a seasoning, and a food or beverage product with reduced off-flavor.

### BACKGROUND ART

Ergothioneine is discovered as a hydrophilic sulfur-containing amino acid isolated from the rye ergot fungus (Claviceps purpurea), and has been confirmed to be present also in vivo in plants and animals. However, plants and animals cannot synthesize the ergothioneine, and ergothioneine in vivo is considered to be derived from ergothioneine synthesized by microorganisms such as basidiomycetes.

The ergothioneine has high antioxidant properties, and has been reported to have an elastase inhibitory effect and a tyrosinase inhibitory effect, attracting particular attention in the cosmetic and food fields such as skin whitening and wrinkle prevention. In addition, it has been found that the ERG is involved in the biological antioxidant defense system, and its application in the medical field is also being attempted.

Although supplements and the like containing the ergothioneine are useful for maintaining and promoting health, the ergothioneine has a distinctive flavor, particularly bitterness, and it has been reported that, in order to suppress this bitterness, an oral composition in which ergothioneine is blended with vitamin E compounds (Patent Literature 1), arachidonic acids (Patent Literature 2), or theanine (Patent Literature 3) can be obtained as an oral composition in which bitterness derived from ergothioneine is suppressed.

On the other hand, potassium chloride is used as an alternative to sodium chloride, but its bitterness poses a problem. In koji mold-fermented beverages such as sake, bitterness of arginine has become an issue, and attempts have been made to reduce the bitterness. In addition, in soybean hydrolysates, bitterness attributable to soybean peptides is also an issue.

### Prior Art Documents

### [Patent Literatures]

Patent Literature 1: PCT International Publication No. WO2023/120370
Patent Literature 2: PCT International Publication No. WO2023/120378
Patent Literature 3: PCT International Publication No. WO2023/120367
Patent Literature 4: PCT International Publication No. WO2019/240243
Patent Literature 5: PCT International Publication No. WO2023/234307

### SUMMARY

### Technical Problem

An object to be achieved by the present invention is to provide an off-flavor reducer that reduces off-flavor of a bitter substance or a seasoning, or to provide a food or beverage product in which off-flavor is reduced by adding the off-flavor reducer.

### Solution to Problem

As a result of intensive studies, the present inventors found that, by allowing a trace amount of ergothioneine, which may have bitterness, to be contained in a food or beverage product containing a bitter substance, bitterness of the bitter substance can be reduced and bitterness of the food or beverage product can be reduced. The present inventors further found that the ergothioneine can also reduce a pungent taste of seasonings and beany odor of soy milk and the like, thereby completing the present invention.

The present invention relates to an off-flavor reducer according to (1) to (4) below.
(1) An off-flavor reducer for a bitter substance, containing ergothioneine as an active ingredient.
(2) The off-flavor reducer according to (1), in which reduction of off-flavor is reduction of bitterness of soybean peptides or mycoprotein, which are the bitter substance.
(3) An off-flavor reducer for a beverage containing beans as a raw material, containing ergothioneine as an active ingredient.
(4) The off-flavor reducer according to (3), in which reduction of off-flavor is reduction of beany odor of soy milk.

In addition, the present invention relates to a food or beverage product according to (5) and (6) below, soy milk or a fermented soy milk product according to (7) and (8) below, a mycoprotein according to (9) below, or a method for reducing off-flavor of a food or beverage product according to (10) below, and others according to (11) to (16) below.
(5) A food or beverage product containing a bitter substance, in which bitterness of soybean peptides is reduced, the food or beverage product containing ergothioneine in an amount of 0.005% by weight or more relative to a content of the soybean peptides.
(6) The food or beverage product according to (5), in which the food or beverage product is not a soy sauce for retort food, a retort food containing soy sauce, a beverage having enhanced sourness, or a food or beverage product containing an ergothioneine-producing fungal fermentation biomass colored with a pigment or a supernatant thereof.
(7) A soy milk or a fermented soy milk product containing 10 ppm or more of ergothioneine.
(8) The soy milk or the fermented soy milk product according to (7), in which the soy milk or the fermented soy milk product is not a beverage having enhanced acidity.
(9) A mycoprotein containing 300 ppm or more of ergothioneine.
(10) A method for reducing off-flavor of a food or beverage product having off-flavor, including incorporating ergothioneine into the food or beverage product.
(11) Ergothioneine for use in reducing off-flavor of a beverage containing beans as a raw material.
(12) A koji mold fermented product containing ergothioneine for use in reducing off-flavor of a beverage containing beans as a raw material.
(13) Use of ergothioneine for reducing off-flavor of a beverage containing beans as a raw material.
(14) Use of a koji mold fermented product containing ergothioneine for reducing off-flavor of a beverage containing beans as a raw material.
(15) Use of ergothioneine in manufacture of an off-flavor reducer for a beverage containing beans as a raw material.
(16) Use of a koji mold fermented product containing ergothioneine in manufacture of an off-flavor reducer for a beverage containing beans as a raw material.

### Advantageous Effects of Invention

According to the off-flavor reducer of the present invention, the addition of ergothioneine can reduce the bitterness of caffeine, potassium chloride, arginine, or soybean peptides, which are bitter substances, or can reduce the pungent feel of seasonings such as sauce and the beany odor of soy milk and the like. Therefore, by adding an extremely small amount of ergothioneine to a food or beverage product containing these bitter substances and the like, these food or beverage products with improved taste can be obtained.

### DESCRIPTION OF EMBODIMENTS

The present invention relates to an off-flavor reducer containing ergothioneine as an active ingredient, and specifically, is a bitterness reducer for a bitter substance such as caffeine, potassium chloride, arginine, and soybean peptides, or is a pungent taste reducer for a seasoning such as sauce, or a beany odor reducer for soy milk or the like. In addition, the present invention relates to a food or beverage product with reduced off-flavor by incorporating ergothioneine which is an off-flavor reducer.

In the present invention, "%" means "% by weight" even when the unit is not explicitly specified, and 1 ppm is 0.0001% by weight.

The ergothioneine (hereinafter, also referred to as "ERG") is contained in some mushrooms of basidiomycetes, for example, edible mushrooms such as oyster mushrooms, shiitake mushrooms, maitake mushrooms, and king oyster mushrooms, and is particularly abundantly contained in golden oyster mushrooms (Tamogitake). It is also known that koji molds produce the ERG. As methods for producing the ERG, extraction from basidiomycetes such as golden oyster mushrooms, chemical synthesis, and fermentation using microorganisms are carried out.

As the mushrooms used for the extraction of ERG, mushrooms belonging to the genus Pleurotus of the family Pleurotaceae, such as golden oyster mushroom (Pleurotus cornucopiae var. citrinopileatus), oyster mushroom (Pleurotus ostreatus), shiitake mushroom (Lentinula edodes), and maitake mushroom (Grifola frondosa), can be preferably mentioned because of their high ERG content, and one or a combination of two or more of these can be used.

The extraction from basidiomycetes such as golden oyster mushrooms requires time for obtaining raw materials and is not suitable for mass production. Chemical synthesis is suitable for mass production, but requires the use of expensive synthesis reagents. Therefore, research has been conducted on fermentation-based production methods, such as fermentation using C1 compound-assimilating bacteria or yeast, fermentation using microorganisms engineered to overexpress ERG biosynthetic genes, and solid culture using koji molds into which ERG biosynthetic genes have been introduced so as to overexpress ERG.

As the koji mold that produces ERG, any fungus belonging to the genus Aspergillus can be used. Examples thereof include Aspergillus oryzae, Aspergillus sojae, Aspergillus niger, Aspergillus luchuensis, and Aspergillus tamarii. In addition, as the koji mold that produces ERG, in addition to the above-described wild strains, a mutant strain highly producing ERG can be isolated and used by a general mutagenesis method.

Furthermore, a high ERG-producing koji mold strain into which a gene related to ERG biosynthesis is introduced by genetic recombination can be used. Examples thereof include, but are not limited to, a koji mold mutant strain into which the egtA gene has been introduced (see Patent Literature 4), and a mutant strain of the genus Aspergillus in which ERG expression has been increased by introducing the AO090005000664 gene specific to the genus Aspergillus (amino acid sequence encoded thereby: SEQ ID NO: 1), or an ortholog gene thereof, into which a specific genetic mutation has been introduced, such as a G428S mutation, a C459F mutation, and a deletion of 1 to 112 amino acids in the region from W404 to Q515 (see Patent Literature 5).

As used herein, the term "high ERG-producing koji mold strain" refers to a strain in which the produced ERG is 5 to 10 times or more, preferably 20 times or more, in a liquid culture at 20°C to 30°C for 3 to 14 days (Puffmin SM medium (a solution obtained by adding and suspending 5% to 10% of Puffmin SM (manufactured by Kikkoman Corporation) in water), with no pH adjustment) as compared to a non-mutated or non-transformed strain. Examples thereof include an Aspergillus sojae strain in which the above-described egtA gene is forcibly expressed, or an Aspergillus oryzae mutant strain containing an amino acid mutation or amino acid deletion in the region of W404 to Q515 of the above-described mutant AO090005000664 gene and an ortholog gene thereof.

For the ERG according to the embodiment of the present invention, a commercially available ERG product by chemical synthesis may be used, or an extract from mushrooms containing ERG, a koji mold producing ERG and a culture thereof, or sake lees produced using a koji mold, or a purified product thereof may be used. In addition, for food and beverage products using koji mold as a raw material, the amount of ERG in the food and beverage product can be increased by using a koji mold that highly produces ERG, without adding ERG.

The bitter substance subject to bitterness reduction of the present invention includes caffeine, potassium chloride, arginine, or soybean peptides, but the bitter substance is not limited thereto.

In addition, the seasoning subject to pungent taste reduction of the present invention is a seasoning having a pungent taste including spices, and includes, for example, sauces such as Worcestershire sauce and medium-thick sauce, but is not limited thereto.

Furthermore, the beverage subject to beany odor reduction of the present invention is a beverage such as soy milk containing beans as at least a part of the raw material.

The food or beverage product according to the embodiment of the present invention is food, beverage, or seasoning, and contains one or more bitter substances. It can be used in foods, beverages, or seasonings containing one or more bitter substances, which is not particularly limited.

The reduction of off-flavor means that the off-flavor is perceived to be weaker as compared to the case without the off-flavor reducer in the food or beverage product. For example, it means that, by adding the bitterness reducer, equivalent bitterness is perceived even when caffeine or the like in the food or beverage product is increased by, for example, 1% to 50%. It also means that, by adding the bitterness reducer, bitterness equivalent to that in the case of containing, for example, 0.5 to 0.9 times the amount of caffeine or the like can be perceived.

In the step of producing the food or beverage product, when the ERG is added to the food or beverage product, the timing of addition may be in any step, and the method of addition is not limited as long as the required amount is contained in the final food or beverage product.

For a food or beverage product containing caffeine as a bitter substance, the bitterness-reducing effect on the food or beverage product is exerted by incorporating ERG in an amount of 0.1% by weight or more, for example, 0.1%, 0.2%, 0.3%, or 0.5% by weight or more, relative to the caffeine content. In addition, for a food or beverage product containing potassium chloride or arginine, the bitterness-reducing effect on the food or beverage product is exerted by incorporating ERG in an amount of 0.01% by weight or more, for example, 0.01%, 0.02%, 0.03%, or 0.05% by weight or more, relative to the potassium chloride or arginine content.

In addition, the bitterness-reducing effect on the food or beverage product is exerted by incorporating ERG in an amount of 0.005% by weight or more, for example, 0.005%, 0.01%, 0.05%, or 0.08% by weight or more, relative to a content of soybean peptides.

Therefore, when the food or beverage product contains any one or more of caffeine, potassium chloride, arginine, or soybean peptides as the bitter substance, the bitterness-reducing effect is exerted by incorporating ERG in an amount of 0.005% to 0.1% by weight or more relative to any of the contents.

In addition, since the bitterness-reducing effect does not necessarily increase even when a large amount of ERG is incorporated, considering economic efficiency, the ERG can be incorporated in an amount of 15% by weight or less, for example, 12% or 9% by weight or less, or 6% or 3% by weight or less, relative to the content of the bitter substance in the food or beverage product.

That is, for a food or beverage product containing caffeine, the bitterness-reducing effect on the food or beverage product is exerted at contents of all combinations of these lower limit values and upper limit values by incorporating ERG in an amount of 0.1% by weight or more, for example, 0.1%, 0.2%, 0.3%, or 0.5% by weight or more, and 15% by weight or less, for example, 12%, 9%, 6%, or 3% by weight or less, relative to the caffeine content. In addition, for a food or beverage product containing potassium chloride or arginine, the bitterness-reducing effect on the food or beverage product is exerted at contents of all combinations of these lower limit values and upper limit values by incorporating ERG in an amount of 0.01% by weight or more, for example, 0.01%, 0.02%, 0.03%, or 0.05% by weight or more, and 15% by weight or less, for example, 12%, 9%, 6%, or 3% by weight or less, relative to the potassium chloride or arginine content.

In addition, by incorporating ERG in an amount of 0.005% by weight or more, for example, 0.005%, 0.01%, 0.05%, or 0.08% by weight or more, and 15% by weight or less, for example, 12%, 9%, 6%, or 3% by weight or less, relative to a content of soybean peptides, the bitterness-reducing effect on the food or beverage product is exerted at contents of all combinations of these lower limit values and upper limit values.

For seasonings having a pungent taste including spices of the present invention, for example, sauces such as Worcestershire sauce and medium-thick sauce, the pungent taste is reduced by containing ERG in an amount of 5 ppm or more, for example, 10 ppm or 15 ppm or more, or 20 ppm, 25 ppm, 30 ppm or more, 35 ppm, 40 ppm, 45 ppm, or 50 ppm or more.

In addition, since the pungent taste-reducing effect does not necessarily increase even when a large amount of ERG is incorporated, considering economic efficiency, the ERG can be incorporated into the seasoning in an amount of 0.15% by weight or less, for example, 0.12% or 0.09% by weight or less, or 0.06% or 0.03% by weight or less.

In addition, in soy milk and fermented soy milk products containing soybean peptides which are bitter substances, by incorporating ergothioneine, not only the bitterness but also off-flavor called a beany odor can be reduced.

In the present embodiment, the "soy milk" refers to a beverage containing a milky liquid obtained by extracting proteins and other components from soybeans, such as whole soybeans, defatted processed soybeans, and powdered soybeans, with hot water or the like and removing fibrous materials therefrom. Examples thereof include soy milk products(soy milk, prepared soy milk, and soy milk beverages) set forth in the Quality Labeling Standards for Soy Milk issued by the Consumer Affairs Agency, and also include soy milk products other than those set forth in the Quality Labeling Standards for Soy Milk. In addition, the soy milk in the present embodiment may further contain other auxiliary ingredients (for example, animal and vegetable oils and fats, sweeteners, seasonings such as salt, fruit juices, vegetable juices, flavoring ingredients such as coffee and cocoa, emulsifiers, thickeners, flavorings, and the like). Furthermore, preparations of a so-called soybean liquid prepared by suspending, dissolving, or homogenizing powder of dehulled soybeans or whole soybeans in water, and soybean beverages using the preparations as a raw material, are also included in the soy milk of the present embodiment. The above-described soy milk may be soy milk that has been sterilized for long-term storage and hermetically packaged while maintaining commercial sterility.

A method for producing the soy milk is not particularly limited, and the soy milk can be produced by a method known to those skilled in the art, for example, by soaking soybeans in water overnight and then grinding the soybeans with a grinder. The soybeans may be pretreated by roasting or the like before use. As the soy milk, commercially available soy milk may be used.

When the final product is soy milk other than unadjusted soy milk, various additives used in general soy milk beverages may be added. Examples of the additives include saccharides such as sugar, salt, calcium lactate, emulsifiers, thickeners such as carrageenan, flavorings, colorants, oils and fats, preservatives, antioxidants, emulsifiers, spices, various extracts and pastes, proteins and degradation products thereof, organic acids, organic acid compounds, starch, and stabilizers.

With respect to soybean solids content, under the Japanese Agricultural Standards, soy milk is defined as having a soybean solids content of 8.0% or more, prepared soy milk is defined as having a soybean solids content of 6% or more, and soy milk beverages are defined as having a soybean solids content of 4% or more, and any of these may be used as the soy milk in the present embodiment.

The fermented soy milk product means a fermented product obtained by fermenting soy milk using a koji mold. As the soy milk used as a raw material for producing the fermented soy milk product, soy milk products classified as soy milk, prepared soy milk, and soy milk beverages under the Japanese Agricultural Standards may be used, and the soy milk products are not particularly limited as long as they are obtained by conventional methods.

As the soy milk, commercially available soy milk may be used, or a liquid in which whole soybean flour, defatted soybean flour, or the like is dissolved may be used. As the soy milk used as a raw material for producing the fermented soy milk product, beverages containing soybean-derived proteins may be used, such as beverages obtained by liquefying soybeans as they are or in a state containing fiber without removing soybean fiber (okara), as in soy milk, beverages such as whole soybean beverages, and beverages obtained by adding soybean fiber to soy milk, such as soy milk okara beverages. A concentration of proteins derived from soybeans can be freely set as long as the koji mold can grow. In addition, as the soy milk used as a raw material for producing the fermented soy milk product, for example, soy milk adjusted so that the concentration of proteins derived from soybeans becomes a predetermined concentration may be used.

The fermented soy milk product is produced by fermenting soy milk and, as necessary, performing additional treatments other than the fermentation treatment. Examples of the additional treatment include treatment by conventionally known methods for treating a culture, such as spray drying, retort sterilization, freeze drying, UHT sterilization, pressure sterilization, high-pressure steam sterilization, dry heat sterilization, electromagnetic wave sterilization, highfrequency sterilization, ultraviolet sterilization, and chemical sterilization (alcohol sterilization and electrolyzed water treatment).

When the ERG is incorporated in an amount of 10 ppm or more, preferably 20 ppm or more, relative to soy milk or a fermented soy milk product, a beany odor can be reduced, and the bitterness of soybean peptides can also be reduced. Since the beany odor-reducing effect does not necessarily increase even when a large amount of ERG is incorporated, considering economic efficiency, the ERG can be incorporated in an amount of 0.15% by weight or less, 0.12% or 0.09% by weight or less, or 0.06% or 0.03% by weight or less, relative to the soy milk or the like.

In addition, in mycoprotein containing arginine which is a bitter substance, by incorporating ergothioneine, not only the bitterness can be reduced but also umami can be enhanced. The mycoprotein is a food obtained by optionally seasoning a koji mold fermented product prepared by fermenting a koji mold in a solid medium or a liquid medium. By incorporating 300 ppm or more of ERG relative to mycoprotein, the bitterness of arginine contained in the mycoprotein can be reduced, and at the same time, the umami can be enhanced.

In addition, by producing an ERG-rich koji mold fermented product with a high ERG-producing koji mold strain without adding ERG, a koji mold fermented product containing 50 ppm or more, 100, 300, 500, or 1,000 ppm or more of ERG, and containing 5% or less, 4%, 3%, 2%, or 1% or less of ERG can be obtained.

The concentration of ERG is measured by LCMS under the following conditions.

### (HPLC conditions)

HPLC analysis is performed under the following conditions.
Apparatus: HPLC apparatus; HPLC: Nexera series set (manufactured by Shimadzu Corporation)
Column: COSMOSIL 2.5HILIC column 3.0 x 150 2.5 µm 3.0 mm I.D. x 15.0 cm (manufactured by Nacalai Tesque, Inc.)
Flow rate: 0.5 mL/min
Temperature: 40°C
Mobile phase: A) 0.1% (v/v) aqueous formic acid solution, B) 0.1% (v/v) formic acid in acetonitrile
Isocratic: 0 to 10 minutes (B: 80%)
Injection volume: 5 µL

### (Mass spectrometry)

Apparatus: LCMS-2020 (manufactured by Shimadzu Corporation)
(Mass spectrometry (LC-MS) analysis conditions)
Ionization conditions: ESI+
MS conditions: SIM ERG; m/z: 230.1 ([M+H]⁺)
Retention time: around 5 minutes

### Examples

Hereinafter, the present invention will be specifically described in detail with reference to Examples, but the present invention is not limited thereto.

In Examples, when simply indicated as "%", it means "% by weight". In addition, samples at room temperature were used for sensory evaluation.

### [Test 1: Bitterness-reducing effect on caffeine, a bitterness standard substance, by ERG]

Samples were prepared by adding ergothioneine to caffeine samples having four concentrations of 0.01%, 0.03%, 0.05%, and 0.06% obtained by adding caffeine to pure water to final concentrations of 0.05 ppm, 0.1 ppm, 0.25 ppm, and 0.5 ppm (ERG0.05 to 0.5 in Table 1 below; hereinafter, "ERGX" means a sample to which X ppm of ERG was added).

**[Table 1]**

| | ERG0 | ERG0.05 | ERG0.1 | ERG0.25 | ERG0.5 |
|---|---|---|---|---|---|
| Caffeine | 0.01% to 0.06% | | | | |
| ERG | 0 ppm | 0.05 ppm | 0.1 ppm | 0.25 ppm | 0.5 ppm |

Bitterness was sensorially evaluated by an expert panel consisting of four trained bitterness-sensitive subjects. A tasting test by an expert panel of four was conducted on 0.01% to 0.06% caffeine samples to which ERG was added at each concentration (the concentration was not disclosed to the panel), using a 0.01% to 0.06% caffeine sample to which no ergothioneine was added as a control. Pairs combining the control 0.01% to 0.06% caffeine sample and the 0.01% to 0.06% caffeine sample containing ergothioneine at each concentration were presented to the expert panel, and the panel evaluated which sample of the presented pair was perceived to have bitterness by a paired comparison test. The results are shown in Table 2.

### <Evaluation method of paired comparison test>

### Evaluation results of taste (bitterness) of test product compared with control

∇: Taste (bitterness) was reduced compared to the control.
0: Taste (bitterness) was similar to that of the control.
∘: Taste (bitterness) was enhanced compared to the control.

The evaluation method of the paired comparison test and the indication of the evaluation results are the same in other tests.

**[Table 2]**

| Panelist A | | | | | |
|---|---|---|---|---|---|
| Concentration of caffeine | Control | Test product | | | |
| | ERG0 | ERG0.05 | ERG0.1 | ERG0.25 | ERG0.5 |
| 0.01% | ◊ | ∇ | ∇ | ∇ | ∇ |
| 0.03% | ◊ | ∇ | ∇ | ∇ | ∇ |
| 0.05% | ◊ | ◊ | ∇ | ∇ | ∇ |
| 0.06% | ◊ | ◊ | ◊ | ∇ | ∇ |

**Panelist B**

| Concentration of caffeine | Control | Test product | | | |
|---|---|---|---|---|---|
| | ERG0 | ERG0.05 | ERG0.1 | ERG0.25 | ERG0.5 |
| 0.01% | ◊ | ◊ | ∇ | ∇ | ∇ |
| 0.03% | ◊ | ◊ | ∇ | ∇ | ∇ |
| 0.05% | ◊ | ◊ | ∇ | ∇ | ∇ |
| 0.06% | ◊ | ◊ | ◊ | ◊ | ∇ |

**Panelist C**

| Concentration of caffeine | Control | Test product | | | |
|---|---|---|---|---|---|
| | ERG0 | ERG0.05 | ERG0.1 | ERG0.25 | ERG0.5 |
| 0.01% | ◊ | ∇ | ∇ | ∇ | ∇ |
| 0.03% | ◊ | ∇ | ∇ | ∇ | ∇ |
| 0.05% | ◊ | ◊ | ∇ | ∇ | ∇ |
| 0.06% | ◊ | ◊ | ◊ | ◊ | ∇ |

**Panelist D**

| Concentration of caffeine | Control | Test product | | | |
|---|---|---|---|---|---|
| | ERG0 | ERG0.05 | ERG0.1 | ERG0.25 | ERG0.5 |
| 0.01% | ◊ | ∇ | ∇ | ∇ | ∇ |
| 0.03% | ◊ | ◊ | ∇ | ∇ | ∇ |
| 0.05% | ◊ | ◊ | ∇ | ∇ | ∇ |
| 0.06% | ◊ | ◊ | ◊ | ◊ | ∇ |

The results of the sensory evaluation showed that in the caffeine samples of 0.01% or more and 0.05% or less, when ERG was added to a final concentration of 0.1 ppm or more, all the panelists evaluated that the bitterness was reduced. In the 0.06% caffeine sample, when ERG was added to a final concentration of 0.5 ppm or more, all the panelists evaluated that the bitterness was reduced.

In the 0.01% caffeine sample, since the bitterness was reduced when ERG was added to a final concentration of 0.1 ppm or more, the amount of ERG having a bitterness-reducing effect relative to the caffeine content in the food or beverage product corresponds to 0.1% by weight or more of ERG.

### [Test 2: Bitterness-reducing effect on potassium chloride by ERG]

A sample (ERG5) was prepared by adding ergothioneine to a potassium chloride sample having a concentration of 5.0% obtained by adding potassium chloride to pure water so that the final concentration was 5 ppm (Table 3).

To an expert panel of five trained bitterness-sensitive subjects, pairs combining a control 5% potassium chloride sample to which ERG was not added (ERG0) and a 5% potassium chloride sample containing ergothioneine added to a final concentration of 5 ppm were presented, and the panel evaluated which sample of the presented pair was perceived to have bitterness and saltiness by a paired comparison test. The results are shown in Table 4.

**[Table 3]**

| | ERG0 | ERG5 |
|---|---|---|
| KCl | 5.00% | 5.00% |
| ERG | 0 ppm | 5 ppm |

**[Table 4]**

| Bitterness reduction | | | | | | |
|---|---|---|---|---|---|---|
| Control | Test product | Panelist A | Panelist B | Panelist C | Panelist D | Panelist E |
| ERG0 | ERG0 | ◊ | ◊ | ◊ | ◊ | ◊ |
| ERG0 | ERG5 | ◊ | ∇ | ∇ | ∇ | ∇ |

**Saltiness enhancement**

| Control | Test product | Panelist A | Panelist B | Panelist C | Panelist D | Panelist E |
|---|---|---|---|---|---|---|
| ERG0 | ERG0 | ◊ | ◊ | ◊ | ◊ | ◊ |
| ERG0 | ERG5 | ○ | ○ | ○ | ○ | ○ |

As a result, four of the five panelists evaluated that the 5% potassium chloride aqueous solution containing 5 ppm ERG had reduced bitterness, and all the five panelists evaluated that the 5% potassium chloride aqueous solution containing 5 ppm ERG had increased saltiness.

In the 5% potassium chloride aqueous solution, since the bitterness was reduced when 5 ppm or more of ERG was added, the amount of ERG having a bitterness-reducing effect relative to the potassium chloride content in the food or beverage product corresponds to 0.01% by weight or more of ERG.

### [Test 3: Bitterness-reducing effect on processed potassium chloride product by ERG]

A sample (ERG5) was prepared by adding ergothioneine to a processed potassium chloride product sample having a concentration of 5.0% of Cell Salt I (bitterness-masked potassium chloride product; Mitejima Chemical Co., Ltd.) to a final concentration of 5 ppm (Table 5).

Evaluation was performed by the same expert panel of five as in Test 2 by the same paired comparison test as in Test 2. The results are shown in Table 6.

**[Table 5]**

| | ERG0 | ERG5 |
|---|---|---|
| Cell Salt I | 5.00% | 5.00% |
| ERG | 0 ppm | 5 ppm |

**[Table 6]**

| Verification of lower limit of ERG concentration for bitterness reduction effect | | | | | | |
|---|---|---|---|---|---|---|
| Control | Test product | Panelist A | Panelist B | Panelist C | Panelist D | Panelist E |
| ERG0 | ERG0 | ◇ | ◇ | ◇ | ◇ | ◇ |
| ERG0 | ERG5 | ∇ | ∇ | ∇ | ∇ | ∇ |

**Verification of lower limit of ERG concentration for saltiness enhancement effect**

| Control | Test product | Panelist A | Panelist B | Panelist C | Panelist D | Panelist E |
|---|---|---|---|---|---|---|
| ERG0 | ERG0 | ◇ | ◇ | ◇ | ◇ | ◇ |
| ERG0 | ERG5 | ○ | ○ | ○ | ○ | ○ |

As a result, all the five panelists evaluated that the 5% processed potassium chloride product aqueous solution to which ERG was added to a final concentration of 5 ppm had reduced bitterness, and evaluated that the 5% processed potassium chloride product aqueous solution to which ERG was added to a final concentration of 5 ppm had increased saltiness.

### [Test 4: Bitterness-reducing effect on arginine by ERG]

A sample (ERG5) was prepared by adding ergothioneine to an arginine sample having a concentration of 5.0% of arginine, which is a bitter amino acid, so that the final concentration was 5 ppm (Table 7).

Pairs combining a control 5% arginine sample to which ERG was not added (ERG0) and a 5% arginine sample to which ergothioneine was added to a final concentration of 5 ppm were presented to an expert panel of four, and the panel evaluated which sample of the presented pair was perceived to have bitterness and umami by a paired comparison test. The results are shown in Table 8.

**[Table 7]**

| | ERG0 | ERG5 |
|---|---|---|
| Arginine | 5.00% | 5.00% |
| | 0 ppm | 5 ppm |

**[Table 8]**

| Verification of lower limit of ERG concentration for bitterness reduction effect | | | | | |
|---|---|---|---|---|---|
| Control | Test product | Panelist A | Panelist B | Panelist C | Panelist D |
| ERG0 | ERG0 | ◇ | ◇ | ◇ | ◇ |
| ERG0 | ERG5 | ∇ | ∇ | ∇ | ∇ |

**Verification of lower limit of ERG concentration for umami enhancement effect**

| Control | Test product | Panelist A | Panelist B | Panelist C | Panelist D |
|---|---|---|---|---|---|
| ERG0 | ERG0 | ◇ | ◇ | ◇ | ◇ |
| ERG0 | ERG5 | ○ | ○ | ○ | ○ |

As a result, all the four panelists evaluated that the 5% arginine aqueous solution to which ERG was added to a final concentration of 5 ppm had reduced bitterness, and evaluated that the 5% arginine aqueous solution to which ERG was added to a final concentration of 5 ppm had increased umami.

In the 5% arginine aqueous solution, since the bitterness was reduced when ERG was added to a final concentration of 5 ppm or more, the amount of ERG having a bitterness-reducing effect relative to the arginine content in the food or beverage product corresponds to 0.01% by weight or more of ERG.

### [Test 5: Bitterness-reducing effect on soybean peptides by ERG]

Samples (ERG0.5 to 10) were prepared by adding ergothioneine to a soybean peptide sample having a concentration of 1.0% of Hinute S (Fuji Oil Co., Ltd.), which is a soybean peptide, to final concentrations of 0.5 ppm, 1 ppm, 3 ppm, 5 ppm, and 10 ppm (Table 9).

Pairs combining a control 1% soybean peptide sample to which ERG was not added (ERG0) and a 1% soybean peptide sample to which ergothioneine was added to final concentrations of 0.5 to 10 ppm were presented to an expert panel of four trained bitterness-sensitive subjects, and the panel evaluated which sample of the presented pair was perceived to have bitterness by a paired comparison test. The results are shown in Table 10.

**[Table 9]**

| | ERG0 | ERG0.5 | ERG1 | ERG3 | ERG5 | ERG10 |
|---|---|---|---|---|---|---|
| Hinute S | 1.00% | 1.00% | 1.00% | 1.00% | 1.00% | 1.00% |
| ERG | 0 ppm | 0.5 ppm | 1 ppm | 3 ppm | 5 ppm | 10 ppm |

**[Table 10]**

| | | Panelist | | | |
|---|---|---|---|---|---|
| Control | Test product | Panelist A | Panelist B | Panelist C | Panelist D |
| ERG0 | ERG0 | ◊ | ◊ | ◊ | ◊ |
| ERG0 | ERG0.5 | ∇ | ∇ | ∇ | ∇ |
| ERG0 | ERG1 | ∇ | ∇ | ∇ | ∇ |
| ERG0 | ERG3 | ∇ | ∇ | ∇ | ∇ |
| ERG0 | ERG5 | ∇ | ∇ | ∇ | ∇ |
| ERG0 | ERG10 | ∇ | ∇ | ∇ | ∇ |

As a result, all the four panelists evaluated that the 1% soybean peptide aqueous solution to which ERG was added to a final concentration of 0.5 ppm had reduced bitterness. In the 1% soybean peptide aqueous solution, since the bitterness was reduced when ERG was added to a final concentration of 0.5 ppm or more, the amount of ERG having a bitterness-reducing effect relative to the soybean peptide content in the food or beverage product corresponds to 0.005% by weight or more of ERG.

### [Test 6: Pungent taste-reducing effect on sauce by ERG]

A sample (ERG5) was prepared by adding ergothioneine to a medium-thick sauce (Kikkoman Delicious Sauce Medium-thick: Kikkoman Corporation) to a final concentration of 5 ppm.

Pairs combining a control medium-thick sauce to which ERG was not added (ERG0) and a medium-thick sauce sample to which 5 ppm ergothioneine was added were presented to an expert panel of two, and the panel evaluated which sample of the presented pair was perceived to have a pungent taste (spiciness and sourness) by a paired comparison test. The results are shown in Table 11.

**[Table 11]**

| Control | Test product | Panelist A | Panelist B |
|---|---|---|---|
| ERG0 | ERG5 | ∇ | ∇ |

The medium-thick sauce to which ERG was added to a final concentration of 5 ppm was evaluated to have reduced pungent taste.

### [Test 7: Beany odor-reducing effect on soy milk by ERG]

Samples (ERG5 to 100) were prepared by adding ergothioneine to soy milk to final concentrations of 5 ppm, 10 ppm, 20 ppm, 40 ppm, 60 ppm, and 100 ppm (Table 12).

Pairs combining a control soy milk to which ERG was not added (ERG0) and soy milk to which ergothioneine was added to final concentrations of 5 to 100 ppm were presented to an expert panel of five trained subjects, and the panel evaluated which sample of the presented pair was perceived to have a beany odor by a paired comparison test. The results are shown in Table 13.

**[Table 12]**

| Blending | | | | | | | |
|---|---|---|---|---|---|---|---|
| | ERG0 | ERG5 | ERG10 | ERG20 | ERG40 | ERG60 | ERG100 |
| Soy milk | 100% | 100% | 100% | 100% | 100% | 100% | 100% |
| ERG ppm | 0 ppm | 5 ppm | 10 ppm | 20 ppm | 40 ppm | 60 ppm | 100 ppm |

**[Table 13]**

| Beany odor | | | | | | |
|---|---|---|---|---|---|---|
| | | Panelist | | | | |
| Control | Test product | A | B | C | D | E |
| ERG0 | ERG0 | ◊ | ◊ | ◊ | ◊ | ◊ |
| ERG0 | ERG5 | ◊ | ◊ | ◊ | ◊ | ◊ |
| ERG0 | ERG10 | ◊ | ◊ | ∇ | ∇ | ◊ |
| ERG0 | ERG20 | ∇ | ∇ | ∇ | ∇ | ∇ |
| ERG0 | ERG40 | ∇ | ∇ | ∇ | ∇ | ∇ |
| ERG0 | ERG60 | ∇ | ∇ | ∇ | ∇ | ∇ |
| ERG0 | ERG100 | ∇ | ∇ | ∇ | ∇ | ∇ |

For the soy milk to which ergothioneine was added to 20 ppm or more, all the panelists evaluated that the beany odor was reduced. In addition, for the soy milk to which ergothioneine was added to 10 ppm or more, two panelists evaluated that the beany odor was reduced.

### [Test 8: Bitterness-reducing effect on mycoprotein by ERG]

Mycoprotein was produced by the following production method.

Fermentation was performed in a 30 L jar (manufactured by Marubishi Bioengineering Co., Ltd.). Water was added to 1.5 kg of okara powder to bring the volume to 15 L, and 2.25 g of Shin-Etsu Silicone (registered trademark) KM72F (manufactured by Shin-Etsu Chemical Co., Ltd.) as an antifoaming agent was added, followed by sterilization at 123°C for 60 minutes. An enzyme solution filtered through a filter having a pore size of 0.22 µm was added so that the final concentration of arabinase was 0.6 U/ml and the final concentration of cellulase was 0.1 U/ml, and the mixture was reacted with stirring at 60°C for 2 hours. After the reaction, the mixture was cooled to 30°C.

Pre-culture was performed as follows. For each strain, 5 g of okara powder and 100 ml of water were added to one 500 ml baffled Erlenmeyer flask, and autoclaved (121°C, 30 minutes). 0.5 ml of a glycerol stock of the Aspergillus oryzae strain, which is the seed koji, was added, and inoculated so that the initial number of spores in the pre-culture liquid became 5 x 10⁵/ml. The pre-culture liquid was cultured with shaking for 24 hours (30°C, 160 rpm). Thereafter, the pre-culture liquid was inoculated into the 30 L jar and cultured at 30°C for 3 days. The aeration rate and the agitation speed were initially set at 0.5 vvm and 250 rpm, respectively, and were increased to 1 vvm and 330 rpm after 18 hours. After culturing, the fermented product was subjected to a heat sterilization treatment (80°C, 30 minutes).

The fermented product subjected to the heat sterilization treatment described above was dried for 1 minute with a drum dryer (manufactured by Katsuragi Industry Co., Ltd., product name "Drum Dryer D-00") set at a gap of 0.3 mm and a surface temperature of 150°C. This is referred to as fermented okara. Using the fermented okara obtained by the procedure described above, using 16.7 g of the dried product, the dried product and water were mixed so as to have a ratio of 1:2 on a weight basis, further, 3% of soy sauce and 1% of yeast extract were mixed, and kneaded for 10 seconds with a kneading machine (manufactured by Tiger Corporation, product name "Micom Food Processor SKF-H101"). At that time, a product to which 330 ppm of ergothioneine was added (Example) and a product without addition (Comparative Example) were respectively prepared. The kneaded sample was formed into a size of 1.8 cm in thickness and 7.5 cm in inner diameter. 5 ml of oil was put in a frying pan, and the formed sample was baked over low heat for 1 minute and 20 seconds on each side, for a total of 2 minutes and 40 seconds.

A sensory evaluation was performed on how the taste of the test product of the Example changed as compared to the Comparative Example which is a control.
○: Umami taste was enhanced compared to the control.
◇: Umami taste was similar to that of the control.
∇: Umami taste was reduced compared to the control.

**[Table 14]**

| Umami taste | | | | | | |
|---|---|---|---|---|---|---|
| | | Panelist | | | | |
| Control | Test product | A | B | C | D | E |
| Comparative Example | Example | ○ | ○ | ○ | ○ | ○ |

**Bitterness**

| | | Panelist | | | | |
|---|---|---|---|---|---|---|
| Control | Test product | A | B | C | D | E |
| Comparative Example | Example | ∇ | ∇ | ∇ | ∇ | ∇ |

By the addition of 330 ppm of ERG, the bitterness of the mycoprotein was reduced, and the umami taste was enhanced.

### [Test 9: Beany odor-reducing effect on fermented soy milk product by ERG]

As inoculum, an Aspergillus oryzae strain in which a G428S genetic mutation was introduced into the AO090005000664 ortholog gene was used. 60 ml of unadjusted soy milk was placed in a sterilized 300 ml Erlenmeyer flask, and a glycerol stock of the inoculum was added, and inoculated so that the initial number of spores became 2.5 x 10⁴/ml. The culture liquid was cultured with shaking for 48 hours (26°C, 180 rpm), and then sterilized. The content of ergothioneine was 37 ppm.

When a sensory evaluation by an expert panel of five was performed on the soy milk before and after fermentation, all the panelists evaluated that the beany odor of the soy milk after fermentation became weaker.

### [SEQUENCE LISTING]

PCT24360KI.xml

## Claims

1. An off-flavor reducer for a bitter substance, comprising ergothioneine as an active ingredient.

2. The off-flavor reducer according to Claim 1, wherein reduction of off-flavor is reduction of bitterness of soybean peptides or mycoprotein, which are the bitter substance.

3. An off-flavor reducer for a beverage containing beans as a raw material, comprising ergothioneine as an active ingredient.

4. The off-flavor reducer according to Claim 3, wherein reduction of off-flavor is reduction of beany odor of soy milk.

5. A food or beverage product containing a bitter substance, in which bitterness of soybean peptides is reduced, the food or beverage product comprising ergothioneine in an amount of 0.005% by weight or more relative to a content of the soybean peptides.

6. A soy milk or a fermented soy milk product comprising 10 ppm or more of ergothioneine.

7. A mycoprotein comprising 300 ppm or more of ergothioneine.

8. A method for reducing off-flavor of a food or beverage product having off-flavor, comprising incorporating ergothioneine into the food or beverage product.
